Europäisches Patentamt

(19) European Patent Office

Office européen des brevets

(11) EP 0 905 848 A1

(12) EUROPEAN PATENT APPLICATION

(43) Date of publication:
31.03.1999 Bulletin 1999/13

(51) Int. Cl.$^6$: H02H 3/33

(21) Application number: 98203312.8

(22) Date of filing: 30.09.1998

(84) Designated Contracting States:
AT BE CH CY DE DK ES FI FR GB GR IE IT LI LU
MC NL PT SE
Designated Extension States:
AL LT LV MK RO SI

(30) Priority: 30.09.1997 NL 1007165

(71) Applicant: Holec Holland N.V.
7550 AA Hengelo (NL)

(72) Inventors:
• Niehoff, Ronaldus Hendrukus Maria
  7577 MB Oldenzaal (NL)
• Limon, Edward Stanley
  7556 ML Hengelo (NL)

(74) Representative:
de Bruijn, Leendert C. et al
Nederlandsch Octrooibureau
P.O. Box 29720
2502 LS Den Haag (NL)

(54) Earth fault detection circuit having a minimum delay for high fault currents

(57) Earth-fault detection circuit for detecting an earth fault in a circuit supplied by a supply source via supply lines, comprising a current transformer which is to be incorporated in the supply lines. At the output of the current transformer, a current is delivered which is a measure of an earth-fault current occurring in the supplied circuit and/or the supply lines. Connected to the output of the current transformer is a rectifier for obtaining a unidirectional signal, which signal is fed via an integrator to an input of a comparator, to another input of which a reference signal is applied. A detection signal occurs at the output of the comparator if the signal present at the input is greater than the reference signal. The unidirectional signal is fed via a cascade circuit of the integrator and an amplitude limiter to one input of the comparator.

Fig-2

## Description

The invention relates to an earth-fault detection circuit for detecting an earth fault in a circuit supplied by a supply source via supply lines, comprising a current transformer which is to be incorporated in the supply lines and at whose output a current is delivered which is a measure of an earth-fault current occurring in the supplied circuit and/or the supply lines, a rectifier connected to the output of the current transformer for obtaining a unidirectional signal, which signal is fed via an integrator to an input of a comparator, to another input of which a reference signal is applied and at whose output a detection signal occurs if the signal present at the input is greater than the reference signal.

Such a circuit is disclosed in GB-A-2 268 011, in which a voltage-dependent earth-fault detection circuit is described, or in EP 0 702 445 which discloses a voltage-independent circuit.

Earth-fault detection circuits are used in order to monitor a circuit supplied by means of a supply source, such as a system which is supplied by the mains, for earth-fault or earth-leakage currents. The detection circuit comprises a current transformer which is incorporated in the supply lines, which current transformer has a secondary winding from which an output current can be derived.

An earth fault or earth leakage manifests itself as a difference between the currents in the supply lines, which difference results in an output current which is proportional to the earth-fault current. The output current of the current transformer is rectified and optionally amplified and then smoothed by means of a filter which acts as an integrator. The smoothed voltage at the output of the integrator is compared with a reference voltage corresponding to the response level of the earth-fault detection circuit. The earth-fault detection circuit must not respond at a fault current of 0.5*IΔn but it must respond at 1*IΔn. Normally, the reference is set at a value corresponding to approximately 0.75*IΔn, the response threshold. The result of the comparison is used to energize an energizing coil which operates contacts incorporated in the supply lines. An earth-fault current which is greater than the nominal earth-fault current will thus set the contacts in the supply lines to the open position.

According to British Patent Application GB-A-2 268 011, an earth-fault detection circuit which comprises the abovementioned basic functions and basic components has a response time which is short at high earth-fault currents and longer at low earth-fault currents. In other words, the delay in the earth-fault detection circuit constructed in this way is inversely proportional to the magnitude of the earth-fault currents.

The said relationship between delay and magnitude of the earth-fault current has the advantage that high earth-fault currents bring about a rapid switching-off of the supply current. This relationship may, however, be undesirable if, for one reason or another, short-term very high currents (surge currents) are presented to the circuit. The earth-fault detection circuit would then react and an undesirable switching-off of the supply source would then take place. According to the British Patent Application GB-A-2 268 011, this is combatted by assigning a fixed minimum delay. However, this also increases the total delay at low earth-fault currents.

The object of the invention is to provide an earth-fault detection circuit of the type mentioned in the preamble, in which the abovementioned problems are avoided and a total delay is achieved which is as small as possible. In addition, the current absorbed by the detection circuit is limited for one of the embodiments.

Said object is achieved, according to the invention, in that a cascade circuit of the integrator and an amplitude limiter is present via which the unidirectional signal is fed to one input of the comparator.

In the known earth-fault detection circuits without additional fault-current-independent delay, the delay will approach the value 0 at high earth-fault currents. The invention has, however, the advantage that, as a result of using an amplitude limiter, a minimum limit delay will always remain at high earth-fault currents, whereas the total delay is also not increased thereby at low earth-fault currents.

If a higher minimum limit were required, the circuit comprising the cascade circuit and comparator can be extended with an adjustment circuit which is connected in cascade therewith and has a fixed delay. Preferably, a limit of approximately 5 times the nominal fault current IΔn is used. It has been found that, as a result of using the amplitude limiter and the fixed delay, an additional degree of freedom, namely the dimensioning of the limiting value, is obtained in order to remain accurately within a specified maximum limit and minimum limit of the increase, as in the case of detection circuits of the S-type.

It is furthermore pointed out that German Patent Application DE-A1-4 220 571 describes an earth-fault detection circuit which complies with minimum and maximum reaction times depending on the earth-fault current. An implementation is, however, not specified therein.

Embodiments of the invention are described in the subsequent dependent claims.

The invention will be explained in greater detail below by reference to the drawings, in which:

Figure 1 shows a block diagram of an earth-fault detection circuit according to the invention;
Figure 2 illustrates an embodiment of the earth-fault detection circuit according to the invention;
Figure 3 shows another embodiment of the earth-fault detection circuit according to the invention;
Figure 4 illustrates yet another embodiment of an earth-fault detection circuit according to the invention;

Figure 5 shows a further embodiment of an earth-fault detection circuit according to the invention;

Figure 6 is a graph of the response time as a function of the fault current of the embodiment according to Figure 2; and

Figure 7 shows an advantageous embodiment of the current limiter used in Figure 2.

Earth-fault switches have, according to the standards applying to them, for example IEC 1008, to be able to interrupt (trip) a circuit within a certain maximum time given a nominal earth-fault current. The earth-fault switches comply with a so-called I-t curve (current-time diagram), in which the switch-off delay is shown as a function of the earth-fault current. Said switches have a short delay at high earth-fault currents and a long delay at low earth-fault currents, the maximum delay, given a minimum fault current, complying with certain standards. It is furthermore pointed out that the entire I-t curve is specified by the standard.

The abovementioned standard IEC 1008 specifies two types of earth-fault switches:

1. A switch of the "general type". In this case a requirement is formulated only for the maximum permissible interruption delay as a function of the current.

2. An earth-fault switch of the "S-type". In this case, requirements are formulated for both the maximum and minimum permissible interruption delay.

Older earth-fault detection circuits (according to EP 0140418 or NL 172711 of the Applicant) have the disadvantage that they also interrupt the supply lines if a very short-term but high current (surge current) is presented to the circuit and can, in general, not comply with the stated minimum and maximum delay times for the S-type.

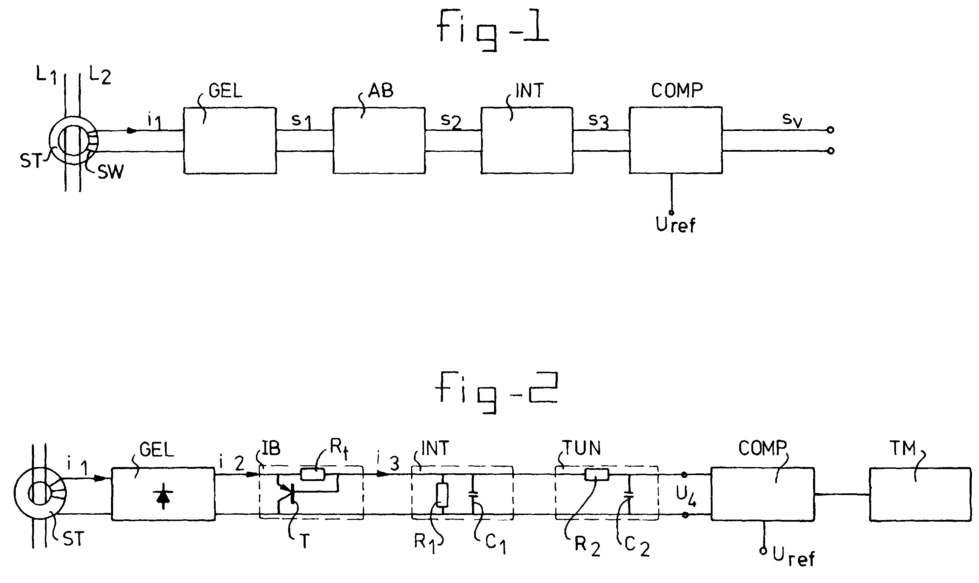

The earth-fault detection circuit according to the invention shown in Figure 1 as a block diagram comprises a current transformer ST through whose core the supply lines between a supply source, for example the mains, and a circuit, for example a domestic system, extend. If an earth fault or earth leakage occurs, the currents through the supply lines L1 and L2 will not be equal to one another in absolute value, with the result that there is generated in the secondary winding SW a current $i_1$ which is a value for the earth-leakage current which occurs. The current $i_1$ is fed to a rectifier GEL, which delivers a unidirectional signal $s_1$, which is fed to the input of the amplitude limiter AB. The output signal $s_2$ of the amplitude limiter AB is fed to the integrator INT, whose output signal $s_3$ is fed to one input of the comparator COMP. A reference signal $U_{ref}$ is fed to the other input of the comparator COMP and there is delivered at the output of the COMP the comparison result $s_v$ which is used to control a trip mechanism for interrupting the supply lines L1 and L2 if the earth-fault current exceeds a predetermined nominal value. The trip mechanism and the associated contacts are not shown since they are completely known to a person skilled in the art.

The essence of the invention is the achievement of a minimum permissible delay for high fault currents by means of limiting the input signal. As a result, an earth-fault switch of the "general type" can be implemented with a minimum permissible delay for high currents. At high currents, the delay will therefore not approach the value 0.

As a result of adding an additional adjustment circuit, a so-called "tuning circuit", the possibility arises of implementing a switch of the S-type. This adjustment circuit has a predetermined fixed delay. Although an additional delay also arises for low earth-fault currents as a result of using the adjustment circuit, the total delay will be lower as a result of using the amplitude limitation. As an embodiment, the adjustment circuit may comprise a series circuit of a resistor and capacitor.

Furthermore, an amplitude limitation at approximately 5 times the nominal fault current IΔn is a suitable value.

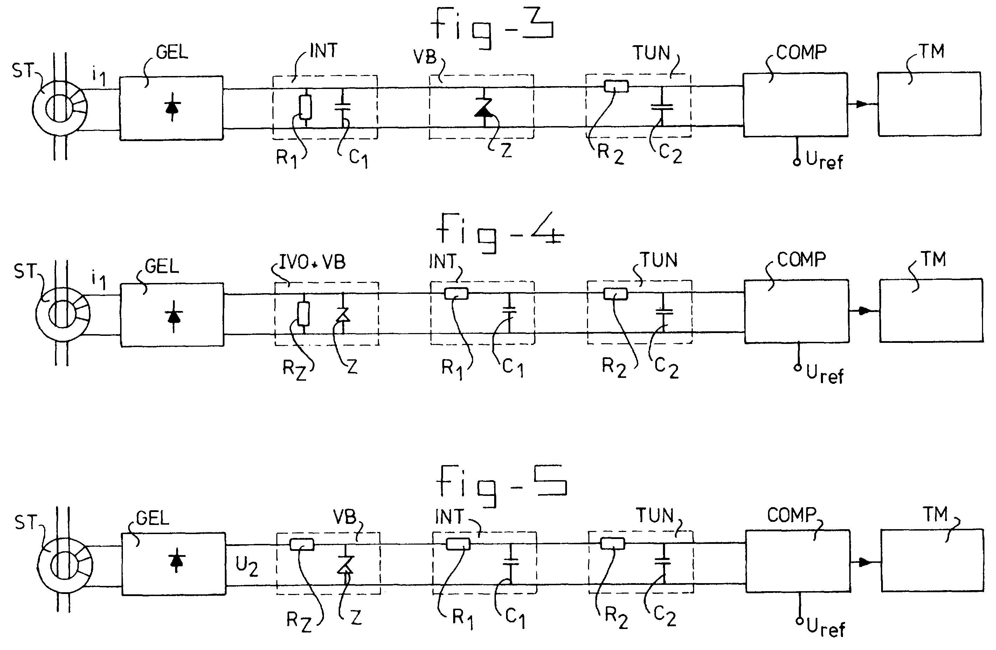

The amplitude limiter may be formed by a current limiter or voltage limiter. Embodiments of this are shown in Figures 2-5.

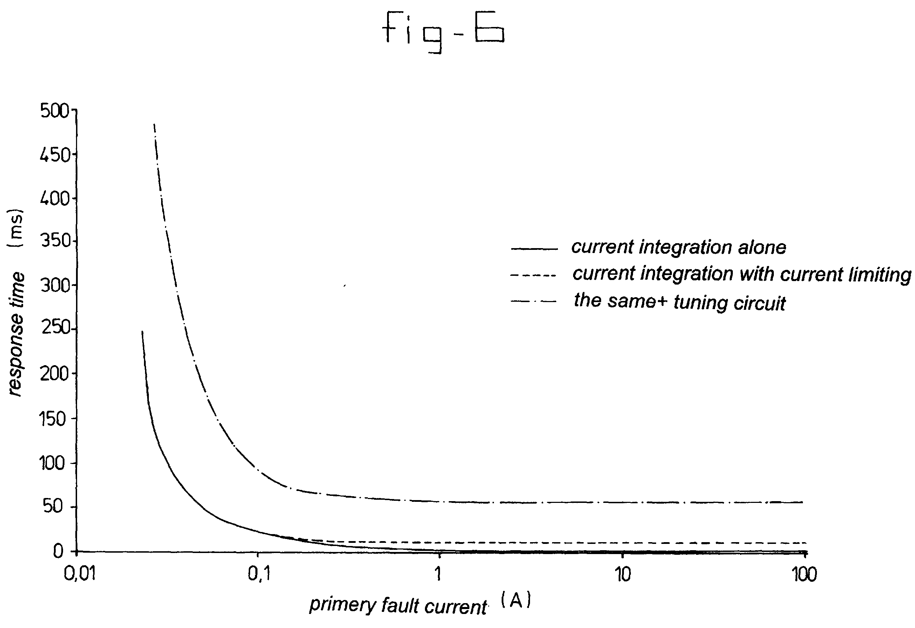

The earth-fault detection circuit according to Figure 2 proceeds from a circuit comprising a current transformer and a rectifier, which delivers a current $i_2$ which is proportional to the rectified earth-fault current $i_1$. Said current is limited in the current limiter IB to a value which corresponds, for example, to 5 times the nominal fault current. The limited current $i_3$ is converted into a voltage and filtered or integrated by means of a filter circuit or integrator INT. The output signal of the integrator is fed to the so-called "tuning circuit". It is pointed out that the "tuning circuit" is optional and is used only for the S-type. This last-mentioned circuit has a predetermined minimum delay in order to comply with the requirements of a minimum permissible delay. The output voltage $u_4$ of the tuning circuit is fed to one input of a comparator COMP, while a reference value $u_{ref}$ is fed to another input of the comparator COMP. If the voltage $u_4$ rises above the reference value $u_{ref}$, the comparator COMP delivers a control signal which is fed to a trip mechanism TM. As a result of limiting the input current, a minimum delay is achieved for the entire filter. For an earth-fault detection circuit having a nominal fault current sensitivity IΔn of 30 mA, Figure 6 indicates how the I-t curves behave with current integration alone, with current integration and current limiting, and current integration and current limiting extended with a tuning circuit, respectively. Current integration alone gives an I-t curve which tends to 0 seconds delay for very high currents. Current limiting and current integration gives a curve which runs flatly or has a constant delay from 5 times the nominal fault current IΔn upwards. Current limiting plus current integration and tuning circuit gives a curve which is higher than the previous one and therefore gives an additional delay for all currents.

The current limiter IB, the integrator INT and the tuning circuit TUN can be implemented in various ways. As an example, Figure 2 indicates that the current limiter IB comprises a pnp transistor T whose emitter-collector path is connected in parallel with the input terminals of the current limiter IB while the base of the transistor T is connected, on one hand, via a resistor $R_t$ to the emitter and, on the other hand, to one output terminal of the current limiter. The other output terminal of the current limiter IB is connected to the collector. In addition, Figure 2 indicates that the integrator INT can be constructed as a parallel circuit of the resistor $R_1$ and the capacitor $C_1$. The tuning circuit is constructed as a series RC section of the resistor $R_2$ and the capacitor $C_2$. Generally known solutions can be used for the comparator and the trip mechanism.

In the embodiments of Figures 3, 4 and 5, voltage limiters are used.

The earth-fault detection circuit according to Figure 3 comprises a current-current rectifier GEL, to whose output an integrator INT is connected. This is followed by the voltage limiter VB and the tuning circuit TUN. It is pointed out that the sequence of integrator and voltage limiter can be reversed. In the embodiment shown in Figure 3, the integrator comprises a parallel circuit of the resistor $R_1$ and the capacitor $C_1$, while the voltage limiter comprises a zener diode Z. In Figure 3, the secondary current $i_1$, which is proportional to the primary fault current, is rectified and converted by means of the resistor $R_1$ into a voltage. The tuning circuit TUN, the comparator COMP and the trip mechanism TM are identical to those of Figure 2. The voltage across the capacitor $C_1$ of the current integrator INT is limited by the zener diode Z of the voltage limiter VB. As a result of limiting said voltage, a minimum delay is achieved in the "tuning circuit" formed by the resistor $R_2$ and the capacitor $C_2$. The tuning circuit is therefore always present in the case of Figure 3. The position of the I-t curve for this circuit differs only marginally from that of the circuit according to Figure 2.

A further variant of the invention is shown in Figure 4. This comprises a current-current rectifier, a conversion of current to voltage and a voltage limitation being used. The current from the rectifier is converted into a voltage which is limited by the voltage limiter Z. In the variant shown in Figure 4, the current-voltage converter and voltage limiter IVO + VB comprises a parallel circuit of the resistor $R_Z$ and the zener diode Z. In Figure 4, the secondary current $i_1$, which is proportional to the primary fault current, is rectified and converted into a voltage by means of the resistor $R_Z$. The limited voltage is filtered using an RC filter comprising the series circuit of the resistor $R_1$ and the capacitor $C_1$. The RC filter provides for the integration of the detected voltage. Here, again, an additional minimum delay is used by means of an optional tuning circuit which is to be used for the purpose of the S-type and comprises the resistor

$R_2$ and the capacitor $C_2$.

Figure 5 shows yet another variant of the invention, in which a rectifier from earth-fault current to detection voltage is used as a detection current converter, that is to say a voltage amplifier. This proceeds from a rectifier which delivers a rectified voltage which is proportional to the earth-fault current to be rectified. The voltage is limited by voltage limiter VB, which comprises, in the embodiment shown in Figure 5, a series circuit of a resistor $R_2$ and a zener diode Z. The voltage across the zener diode is fed to the integrator INT, which comprises the series circuit of the resistor $R_1$ and the capacitor $C_1$. The remaining section is identical to that of Figure 4. Optionally, integrator and voltage limiter can be interchanged. In the variants described above, the ratio of the RC time of the integrator $R_1C_1$ divided by the RC time of the tuner $R_2C_2$ is in the range from 3.0 to 10.0. It is furthermore pointed out that, in the voltage-limited variants, the integration function and the voltage-limiting function can be interchanged.

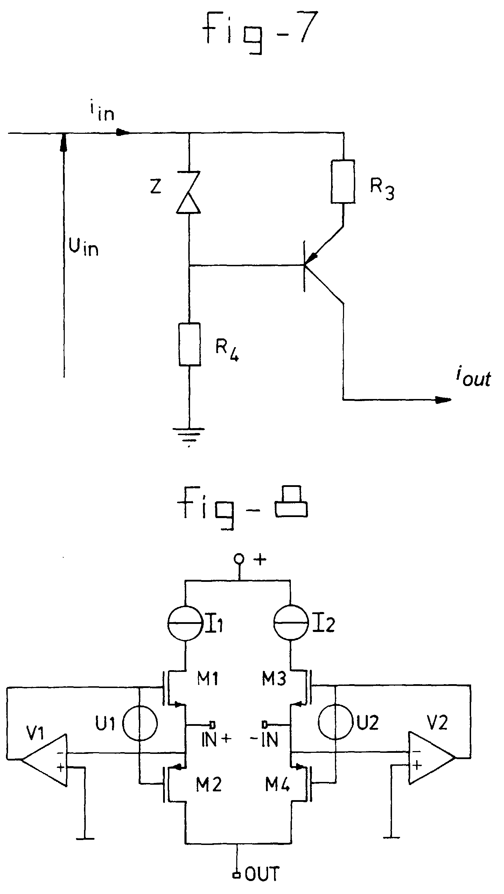

The advantageous embodiment, shown in Figure 7, of the current limiter of Figure 2 comprises a series circuit of a zener diode Z and a resistor $R_4$ which is connected across the input of the current limiter. The current limiter comprises, in addition, a transistor T, whose base is connected to the connection point between the zener diode Z and the resistor $R_4$, while its emitter is connected via a resistor $R_3$ to the input terminal of the current limiter, to which input terminal the zener diode is also connected. The output current $i_{out}$ of the current limiter can be tapped off from the collector of the transistor T.

If it is assumed that the zener voltage of the zener diode is equal to $V_1$, the maximum output current $i_{out}$ will be equal to

$$\frac{V_1 - U_{BE}}{R_3},$$

where $U_{BE}$ is the voltage across the base-emitter junction.

Once the output current $i_{out}$ has reached the predetermined maximum value as the input current $i_{in}$ increases, the input voltage $U_{in}$ will clip with respect to the supply voltage at even higher input currents. The output current is, as it were, blocked at a fixed maximum value and the input current is not drained to earth, with the result that this current limiter is more economical than the embodiment shown in Figure 2.

Finally, it is pointed out that the circuit according to the invention can be used both for voltage-dependent and voltage-independent earth-fault switches.

**Claims**

1. Earth-fault detection circuit for detecting an earth fault in a circuit supplied by a supply source via supply lines, comprising a current transformer which is to be incorporated in the supply lines and at whose output a current is delivered which is a measure of an earth-fault current occurring in the supplied circuit and/or the supply lines, a rectifier connected to the output of the current transformer for obtaining a unidirectional signal, which signal is fed via an integrator to an input of a comparator, to another input of which a reference signal is applied and at whose output a detection signal occurs if the signal present at the input is greater than the reference signal, characterized in that a cascade circuit of the integrator and an amplitude limiter is present via which the unidirectional signal is fed to one input of the comparator.

2. Earth-fault detection circuit according to Claim 1, wherein the circuit comprising the cascade circuit and the comparator is extended with an adjustment circuit having a predetermined fixed delay.

3. Earth-fault detection circuit according to Claim 2, wherein the adjustment circuit comprises a series circuit of a resistor and capacitor.

4. Earth-fault detection circuit according to Claim 1, 2 or 3, wherein the limitation takes place at approximately 5 times the nominal fault current I$\Delta$n.

5. Earth-fault detection current according to Claim 2, 3 or 4, wherein the ratio of the RC time of the integrator divided by the RC time of the adjustment circuit is in the range from 3 to 10.

6. Earth-fault detection circuit according to Claim 1, 2, 3, 4 or 5, wherein the rectifier and the amplitude limiter are formed by a current-current rectifier and current limiter, respectively.

7. Earth-fault detection circuit according to Claim 6, wherein the current limiter comprises a pnp transistor whose emitter is connected to one input terminal and the collector to the other input terminal of the current limiter and whose base is connected via a resistor to the emitter, and wherein one output terminal of the current limiter is coupled to the base and its other output terminal to the collector.

8. Earth-fault detection circuit according to Claim 6, wherein the current limiter comprises a series circuit of a zener diode and a first resistor connected across the input terminals and also a pnp transistor, wherein the emitter of the pnp transistor is connected via a second resistor to the input terminal connected to the zener diode and its base is connected to the connection point of the zener diode and the first resistor which form the series circuit and wherein its collector is coupled to the output terminal of the current limiter.

9. Earth-fault detection circuit according to Claim 1, 2, 3, 4 or 5, wherein the amplitude limiter is a voltage limiter.

10. Earth-fault detection circuit according to Claim 9, wherein the rectifier is a current-current rectifier and wherein the voltage limiter comprises a zener diode and the integrator comprises a parallel circuit of a resistor and capacitor.

11. Earth-fault detection circuit according to Claim 9, wherein the rectifier is a current-current rectifier, and the cascade circuit of voltage limiter and integrator is extended with a current-voltage converter, and wherein the integrator comprises a series circuit of a resistor and capacitor connected across its input and its output is connected across the capacitor.

12. Earth-fault detection circuit according to Claim 11, characterized in that the current-voltage converter and voltage limiter are formed by a parallel circuit of a resistor and a zener diode.

13. Earth-fault detection circuit according to Claim 9, wherein the rectifier is a current-voltage rectifier, wherein the voltage limiter comprises a series circuit of a resistor and a zener diode connected in parallel across its input and its output is connected across the zener diode and wherein the integrator is a series circuit of a resistor and capacitor connected in parallel across its input and its output is connected across the capacitor.

EP 0 905 848 A1

# fig-1

$L_1$  $L_2$

ST  SW  $i_1$

GEL  $s_1$  AB  $s_2$  INT  $s_3$  COMP  $s_V$

$U_{ref}$

# fig-2

$i_1$  GEL  $i_2$  IB  $R_t$  $i_3$  INT  TUN  COMP  TM

ST  T  $R_1$  $C_1$  $R_2$  $C_2$  $U_4$

$U_{ref}$

## fig-3

ST $i_1$ GEL INT VB TUN COMP TM

$R_1$ $C_1$ Z $R_2$ $C_2$ $U_{ref}$

## fig-4

ST $i_1$ GEL IVO+VB INT TUN COMP TM

$R_Z$ Z $R_1$ $C_1$ $R_2$ $C_2$ $U_{ref}$

## fig-5

ST GEL $U_2$ VB INT TUN COMP TM

$R_Z$ Z $R_1$ $C_1$ $R_2$ $C_2$ $U_{ref}$

EP 0 905 848 A1

Fig-6

— current integration alone
--- current integration with current limiting
—·— the same+ tuning circuit

primery fault current (A)

response time (ms)

## Fig-7

## Fig-8

## EUROPEAN SEARCH REPORT

European Patent
Office

Application Number

EP 98 20 3312

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | FR 2 622 368 A (SERD SOC ET REALISA DISJONCT) 28 April 1989 | 1-5,9-13 | H02H3/33 |
| Y | * page 7, line 11 - page 9, line 32; figures 1,3 * | 6-8 | |
| Y | PATENT ABSTRACTS OF JAPAN vol. 016, no. 017 (P-1299), 16 January 1992 & JP 03 235068 A (TENPAALE KOGYO KK), 21 October 1991 * abstract * | 6-8 | |
| A | FR 2 087 280 A (SAPAREL) 31 December 1971 * page 2, line 15 - line 23; figure 1 * | 1 | |
| D,A | DE 42 20 571 A (ABB PATENT GMBH) 19 May 1993 * abstract * | 1 | |

| TECHNICAL FIELDS SEARCHED (Int.Cl.6) |
|---|
| H02H |

The present search report has been drawn up for all claims

| Place of search | Date of completion of the search | Examiner |
|---|---|---|
| THE HAGUE | 6 January 1999 | Salm, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03 82 (P04C01)

**EP 0 905 848 A1**

### ANNEX TO THE EUROPEAN SEARCH REPORT
### ON EUROPEAN PATENT APPLICATION NO.

EP 98 20 3312

This annex lists the patent family members relating to the patent documents cited in the above-mentioned European search report.
The members are as contained in the European Patent Office EDP file on
The European Patent Office is in no way liable for these particulars which are merely given for the purpose of information.

06-01-1999

| Patent document cited in search report | | Publication date | Patent family member(s) | | Publication date |
|---|---|---|---|---|---|
| FR 2622368 | A | 28-04-1989 | DE | 3807934 A | 03-05-1989 |
| FR 2087280 | A | 31-12-1971 | AR | 193033 A | 30-03-1973 |
| | | | BE | 766908 A | 10-11-1971 |
| | | | DE | 2123849 A | 25-11-1971 |
| | | | NL | 7106498 A | 16-11-1971 |
| | | | ZA | 7103119 A | 26-01-1972 |
| DE 4220571 | A | 19-05-1993 | NONE | | |

EPO FORM P0459

For more details about this annex : see Official Journal of the European Patent Office, No. 12/82